# EUROPEAN PATENT APPLICATION

(11) **EP 1 081 949 A1**
(43) Date of publication of application: **07.03.2001**
(21) Application number: 00904060.1
(22) Date of filing: 21.02.2000
(51) Int. Cl.: H04N 5/91, H04N 5/92, G11B 20/10, G11B 27/031

(54) **NONLINEAR EDITING DEVICE AND NONLINEAR EDITING METHOD**

(30) Priority: 25.02.1999 JP 4776499
(71) Applicant: MATSUSHITA ELECTRIC INDUSTRIAL CO., LTD., Kadoma-shi, Osaka 571-8501 (JP)
(72) Inventor: SOMIYA, Kunitaka, Katano-shi, Osaka 576-0021 (JP)
(74) Representative: Kügele, Bernhard
(86) International application number: JP0000963
(87) International publication number: WO0051347

(57) **Abstract**

Hard disk unit (101) stores a plurality of encoded video data that is encoded in a plurality of compression formats, and the encoded video data is arbitrarily read out. The encoded video data read from hard disk unit (101) is decoded by first multi-format decoder (102) or second multi-format decoder (104) in response to a command of editing control section (109), and is supplied to first format converter (103) or second format converter (105). The data that is converted in relation to video format by each format converter is synthesized by DVE (106), is converted in relation to video format by third format converter (107), and is outputted from video output section (108).

## Description

### FIELD OF THE INVENTION

The present invention relates to a device for editing video data encoded in different compression formats and its method.

### BACKGROUND OF THE INVENTION

Conventionally, video for telecasting programs or the like has been produced by editing video source data recorded on a magnetic tape using a VCR (Video Cassette Recorder). Recently, the video source data has been recorded as digital data. The video source data recorded as the digital data is encoded in compression formats employed by respective recording devices. As the compression formats, there are several kinds of formats such as MPEG (Moving Picture Experts Group) format, a motion-JPEG (Joint Photographic Experts Group) format, a format (it is hereinafter called DV, especially is called DVHD for HD) decided by HD (High-Definition) Digital VCR Conference, and a format (one having 25 Mbps of encoded video rate is hereinafter called DVCPRO, and one having 50 Mbps of encoded video rate is called DVCPRO50) defined in SMPTE 314M of SMPTE (Society of Motion Picture and Television Engineers) standards. A compression format employed by each recording device depends on the device, and an employed magnetic tape varies.

For resolving troublesomeness that the video source data recorded on various magnetic tapes is managed, the compression format of the video source data is often converted and unified in an editing work process, and the video source data converted in compression format is recorded and stored on a magnetic tape in the same format. In other words, the video source data recorded in various compression formats is converted into a prescribed compression format, is recorded on a magnetic tape attachable to a VCR for reproducing editing sources, and is archived.

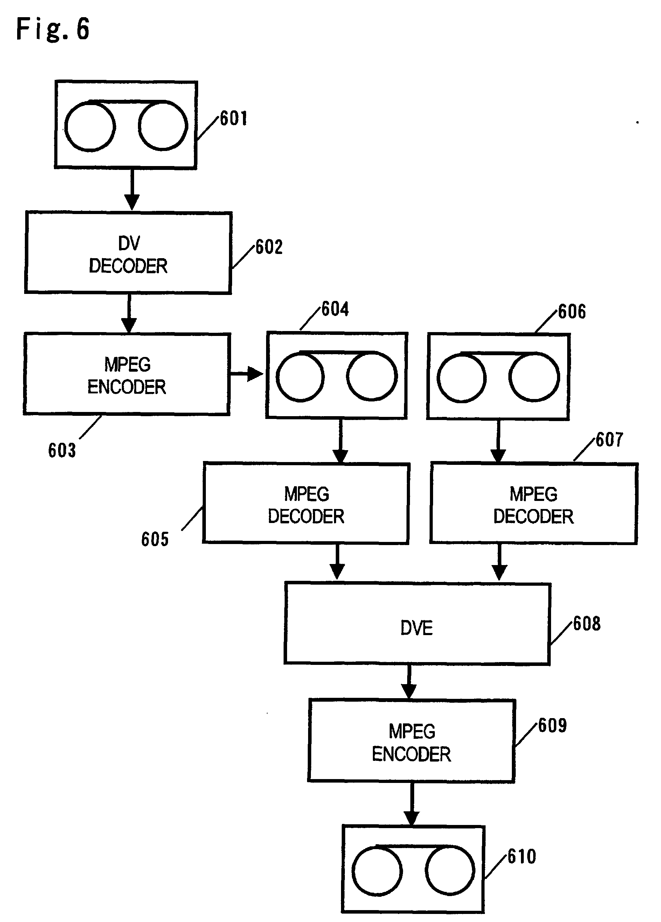

Fig. 6 is a block diagram of a conventional editing system.

This editing system produces broadcasting video data in the MPEG format using video source data recorded in the DV format and video source data recorded in the MPEG format.

In Fig. 6, video source data is recorded on magnetic tape 601 in the DV format. Another video source data is recorded on magnetic tape 606 in the MPEG format. For convenience sake, the video source data recorded on magnetic tape 601 is called video source data 661, and the video source data recorded on magnetic tape 606 is called video source data 666.

First, DV decoder 602 reproduces video source data 661 recorded on magnetic tape 601 and decompresses video source data 661 to base band data. MPEG encoder 603 compresses the decompressed base band data in the MPEG format and records it on magnetic tape 604.

MPEG decoder 605 reproduces the video data recorded on magnetic tape 604 and decompresses it to base band data.

MPEG decoder 607 reproduces video source data 666 recorded on magnetic tape 606 and decompresses video source data 666 to base band data.

Digital video effector (DVE) 608 synthesizes respective base band data supplied from MPEG decoder 605 and MPEG decoder 607 with a given timing, and outputs the base band data given a dissolve effect or a wipe effect.

MPEG decoder 609 compresses the base band data supplied from DVE 608 in the MPEG format, and records it on magnetic tape 610.

Finally the video source data is stored on magnetic tapes 604, 606, and the edited video data is stored on magnetic tape 610. Magnetic tapes 604, 606, 610 have the same format, and the video data is recorded in the same compression format.

Thus, the conventional editing system unifies the formats of the video source data recorded in various compression formats during in an editing work process, and therefore, a process where the video source data is recompressed after being temporarily decompressed is required. This process has a problem that original image quality of the video data is noticeably degraded. In addition, there is a problem that a large space for storing the magnetic tape is also required.

On the other hand, personal-computer-based nonlinear editing devices have recently become widespread. A general nonlinear editing device digitizes a video signal of a base band, encodes it in a prescribed compression format, stores video data in a hard disk, and realizes space-saving. However, a process where the video data recorded on the magnetic tape is reproduced by a VCR, is decompressed to the base band, and then is digitized is still required, and the image degradation caused by the decompression or the reproduction of the video data is a problem.

Some type of nonlinear editing device can directly take in the compressed video data. In this case, also, the nonlinear editing device cannot handle process a plurality of compression formats because it is limited to a prescribed compression format.

Thus, in the general nonlinear editing device the compression format is fixed, and no general nonlinear editing device can edit mixed-video-source-data in a plurality of compression formats.

### DISCLOSURE OF THE INVENTION

The present invention provides a nonlinear editing device and a nonlinear editing method which can eliminate a troublesome process for uniforming formats and allow a high-quality editing work where degradation of video data following recompression is prevented, even when mixed video source data in many kinds of compression formats exists.

For addressing the problems discussed above, the nonlinear editing device in accordance with the present invention comprises the following elements:
a storage that can record video data compressed and encoded in a plurality of kinds of compression formats keeping the compression formats; and
a first multi-format decoder that can decompress the video data recorded in the storage in at least two or more compression formats of the plurality of kinds of compression formats.

The nonlinear editing device in accordance with the present invention further includes a second multi-format decoder that can decompress the video data recorded in the storage in at least one or more compression formats of the plurality of kinds of compression formats.

The nonlinear editing device in accordance with the present invention further includes a digital video effector for synthesizing output data of the first multi-format decoder and output data of the second multi-format decoder.

The nonlinear editing device in accordance with the present invention further includes a format converter for performing at least one of SD (Standard Definition) / HD (Hight Definition) conversion, HD/SD conversion, NTSC (National Television System Committee) / PAL (Phase Alternation Line) conversion, and PAL/NTSC conversion.

For addressing the problems discussed above, the nonlinear editing method in accordance with the present invention comprises a first decoding step for sequentially decompressing video data which is recorded in the storage that can record the video data compressed and encoded in the plurality of kinds of compression formats keeping the compression formats and is in at least two or more compression formats of the plurality of kinds of compression formats.

The nonlinear editing method in accordance with the present invention further includes a second decoding step for sequentially decompressing the video data recorded in the storage in at least one or more compression formats of the plurality of kinds of compression formats.

The nonlinear editing method in accordance with the present invention further includes a video effect step for synthesizing the output data obtained from the first decoding step and the output data obtained from the second decoding step.

The nonlinear editing method in accordance with the present invention further includes a format converting step for performing at least one of the SD/HD conversion, the HD/SD conversion, the NTSC/PAL conversion, and the PAL/NTSC conversion.

### BRIEF DESCRIPTION OF THE DRAWINGS

Fig. 1 is a block diagram of a nonlinear editing device in accordance with exemplary embodiment 1 of the present invention.
Fig. 2 is an operation timing chart of the nonlinear editing device in accordance with exemplary embodiment 1 of the present invention.
Fig. 3 is an operation timing chart of a nonlinear editing device in accordance with exemplary embodiment 2 of the present invention.
Fig. 4 is an operation timing chart of a nonlinear editing device in accordance with exemplary embodiment 3 of the present invention.
Fig. 5 is an operation timing chart of a nonlinear editing device in accordance with exemplary embodiment 4 of the present invention.
Fig. 6 is a block diagram of a conventional nonlinear editing device.

### PREFERRED EMBODIMENTS OF THE INVENTION

Nonlinear editing devices in accordance with four preferred embodiments of the present invention are described hereinafter with reference to the drawings.

### (Preferred embodiment 1)

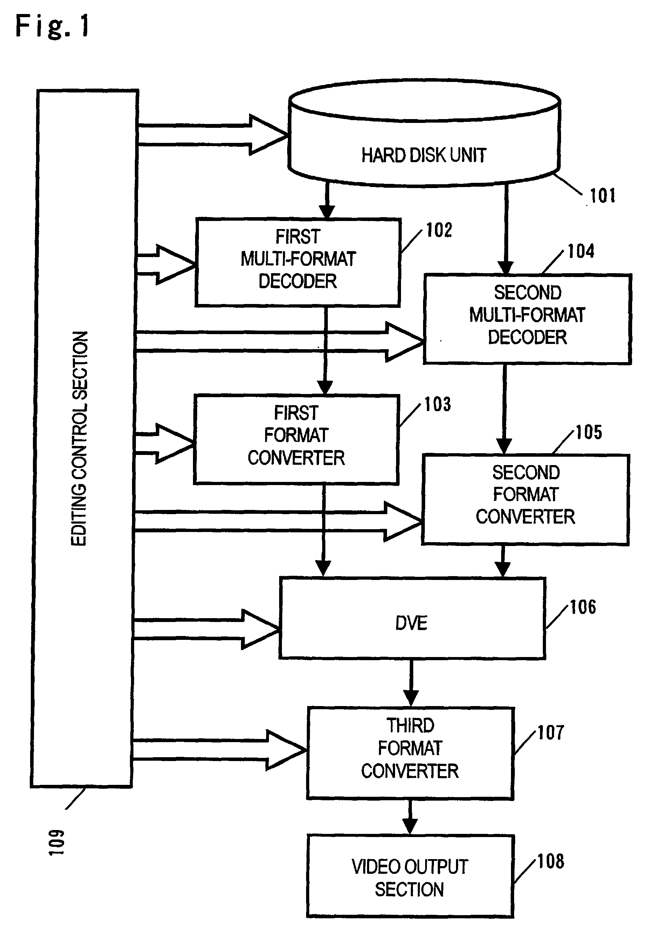

Fig. 1 is a block diagram of a nonlinear editing device in accordance with embodiment 1 of the present invention. In Fig. 1, hard disk unit 101 stores a plurality of encoded video data that is encoded in a plurality of compression formats, and the encoded video data is arbitrarily read out. Hard disk unit 101 can receive encoded video data that is compressed and encoded from outside and store it. In embodiment 1, hard disk unit 101 stores a plurality of encoded video data in each compression format of DVCPRO, DVCPRO50, DV, DVHD, MPEG.

Editing control section 109 has a graphical user interface (GUI) (not shown in Fig. 1). An operator, using the GUI, combines the plurality of encoded video data stored in hard disk unit 101 and produces a desired video sequence. The video sequence is stored in an edit decision list of a reproduction starting point and a reproduction finishing point of each encoded video data, a reading-out order, video effect zone and type, and the like. Editing control section 109 controls the entire nonlinear editing device based on the edit decision list for reproducing the desired video sequence.

The encoded video data read from hard disk unit 101 is supplied to first multi-format decoder 102 or second multi-format decoder 104 in response to a command of editing control section 109.

First multi-format decoder 102 can decode the encoded video data in the compression formats of at least the DVCPRO and the DVCPRO50. Second multi-format decoder 104 can decode the encoded video data in the compression formats of at least the DVHD.

Base band data decoded by first multi-format decoder 102 is sequentially fed into first format converter 103. Base band data decoded by second multi-format decoder 104 is sequentially fed into second format converter 105.

First and second format converters 103, 105, in response to a command of editing control section 109, perform video format conversion such as NTSC/PAL conversion, PAL/NTSC conversion, SD/HD conversion, or HD/SD conversion, and output the converted base band data. In addition, first and second format converters 103, 105 output the fed base band data without any conversion in response to a command of editing control section 109.

Digital video effector (DVE) 106, in response to a command of editing control section 109, synthesizes base band data supplied from first and second format converters 103, 105, applies a video effect such as a dissolve effect or a wipe effect to the data, and outputs it. In addition, DVE 106 can output the base band data supplied from one of first and second format converters 103, 105 without any conversion in response to a command of editing control section 109.

Third format converter 107, in response to a command of editing control section 109, performs a video format conversion such as the NTSC/PAL conversion, the PAL/NTSC conversion, the SD/HD conversion, or the HD/SD conversion, and outputs the base band data. In addition, third format converter 107 can output the fed base band data without any conversion in response to a command of editing control section 109.

Video output section 108 supplies the base band data outputted from third format converter 107 to a monitor (not shown in Fig. 1). Analog output and digital output are switched depending on a connected monitor.

An operation flow of the nonlinear editing device having such structure in accordance with embodiment 1 is hereinafter described.

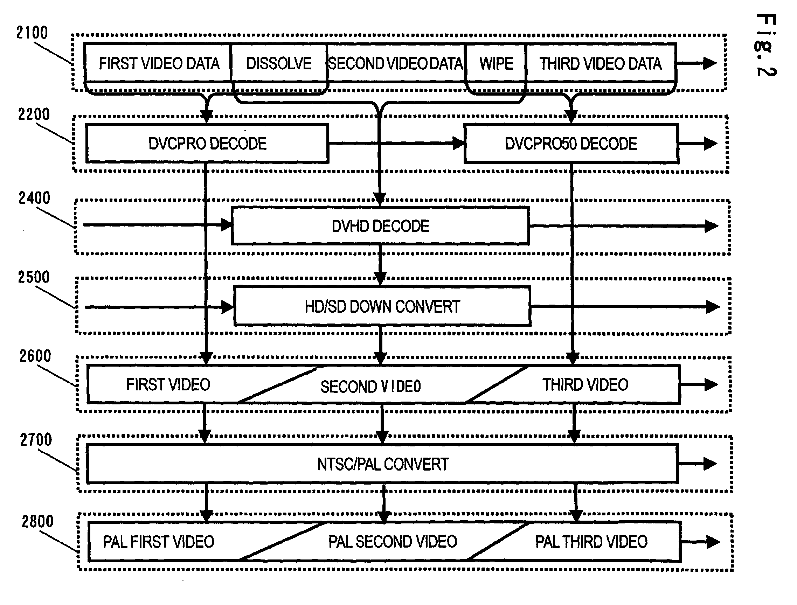

Fig. 2 is an operation timing chart of the nonlinear editing device in accordance with exemplary embodiment 1 of the present invention. In Fig. 2, sequence 2100 is a control sequence based on an edit decision list stored in editing control section 109. Sequence 2200 shows a transition of a decoding operation mode of first multi-format decoder 102. Sequence 2400 shows a transition of a decoding operation mode of second multi-format decoder 104. Sequence 2500 shows a transition of a converting operation mode of second format converter 105. Sequence 2600 shows a video output sequence of DVE 106. Sequence 2700 shows a transition of a converting operation mode of third format converter 107. Sequence 2800 shows a transition of a video output operation of video output section 108.

First, first video data compressed and encoded in the DVCPRO format of a NTSC mode is read out from hard disk unit 101, and is supplied to first multi-format decoder 102. First multi-format decoder 102 decodes the first video data in a DVCPRO format decompression mode. The base band data decoded by first multi-format decoder 102 is supplied to DVE 106 through first format converter 103.

Next, second video data compressed and encoded in the DV format of a HD mode is read out from hard disk unit 101, and is supplied to second multi-format decoder 104. Second multi-format decoder 104 decodes the second video data in a DVHD format decompression mode. HD base band data decoded by second multi-format decoder 104 is supplied to second format converter 105. Second format converter 105 converts down the HD base band data decoded by second multi-format decoder 104 to SD base band data and supplies it to DVE 106.

Next, third video data compressed and encoded in the DVCPRO50 format of the NTSC mode is read out from hard disk unit 101, and is supplied to first multi-format decoder 102. First multi-format decoder 102 is switched from the DVCPRO format decompression mode to a DVCPRO50 format decompression mode in lime for the timing, and decodes the third video data. The base band data decoded by first multi-format decoder 102 is supplied to DVE 106 through first format converter 103.

DVE 106 applies the dissolve effect at a cut back point from a first video to a second video and the wipe effect at a cut back point from the second video to a third video, and outputs the video. Third format converter 107 converts the video output in the NTSC format of DVE 106 to the PAL format.

Video output section 108 outputs the video data converted by third format converter 107 to the monitor.

Thus, in embodiment 1, even if compression formats are not unified, encoded video data keeping various compression formats can be stored in a hard disk unit 101 and is decoded adapted to respective compression formats. As a result, edited results are not required to be recorded on a magnetic tape to prevent recompression from causing degradation of image quality.

In embodiment 1 hard disk unit 101 is used as the storage, but, the storage is not limited to this. For example, other mass storage can be similarly used. Compression formats are not limited to those in embodiment 1 either. In addition, in embodiment 1 two multi-format decoders are provided, but it is not limiting. The format converter may be one capable of switching a plurality of format conversions with each other, and can be eliminated from the device structure.

### (Preferred embodiment 2)

Embodiment 2 is described hereinafter. A structure of a nonlinear editing device in accordance with embodiment 2 is same as that in embodiment 1 where second multi-format decoder 104 is replaced with a software decoder. This software decoder is called third multi-format decoder 304. Third multi-format decoder 304 can decode encoded video data in at least MPEG format in a software process at a processing period 1.5 times longer than a real time process period.

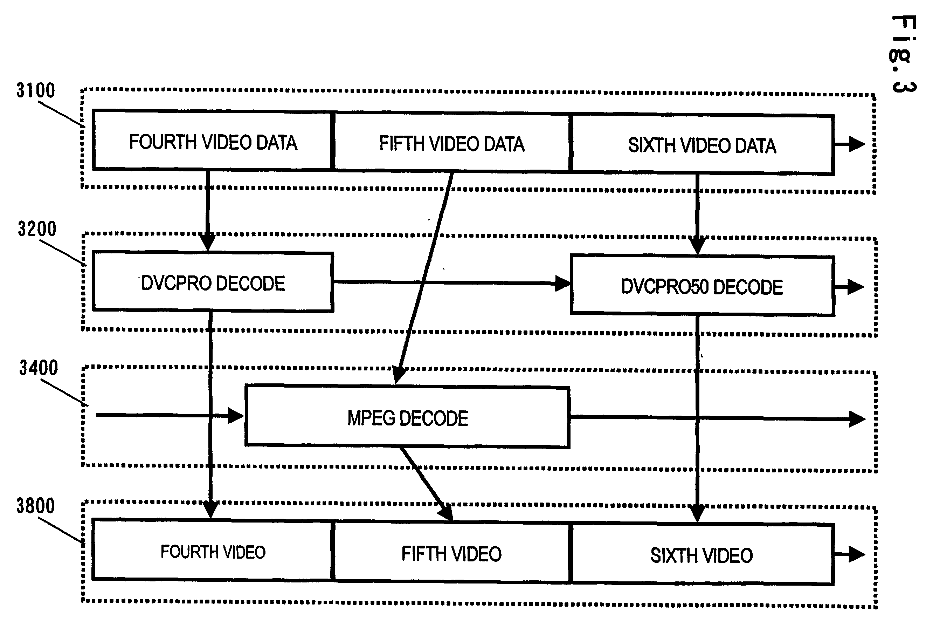

Fig. 3 is an operation timing chart of the nonlinear editing device in accordance with embodiment 2. In Fig. 3, sequence 3100 is a control sequence based on an edit decision list stored in editing control section 109. Sequence 3200 shows a transition of a decoding operation mode of first multi-format decoder 102. Sequence 3400 shows a transition of a decoding operation mode of third multi-format decoder 304. Sequence 3800 shows a transition of a video output operation of video output section 108.

First, fourth video data compressed and encoded in the DVCPRO format is read out from hard disk unit 101, and is supplied to first multi-format decoder 102. First multi-format decoder 102 decodes the fourth video data in a DVCPRO format decompression mode. The data decoded by first multi-format decoder 102 is supplied to DVE 106 through first format converter 103.

Next, fifth video data compressed and encoded in the MPEG format is read out from hard disk unit 101, and is supplied to third multi-format decoder 304. Considering decoding process period of third multi-format decoder 304, the fifth video data is read out from hard disk unit 101 simultaneously with reading out of the fourth video data since the latter portion of the reading out of the fourth video data, and is supplied to third multi-format decoder 304. Third multi-format decoder 304 decodes the fifith video data in a MPEG format decompression mode. The decoded base band data is buffered as appropriate, and is supplied to DVE 106 through second format converter 105 with a suitable timing.

Next, sixth video data compressed and encoded in the DVCPRO50 format is read out from hard disk unit 101, and is supplied to first multi-format decoder 102. First multi-format decoder 102 is switched from the DVCPRO format decompression mode to the DVCPRO50 format decompression mode in time for this timing, and decodes the sixth video data. The base band data decoded by first multi-format decoder 102 is supplied to DVE 106 through first format converter 103.

DVE 106, based on control sequence 3100, performs timely cut back from the fourth video to the fifth video, and from the fifth video to the sixth video, and outputs video data. The video data outputted from DVE 106 is supplied to video output section 108 through third format converter 107, and is supplied to a monitor.

Thus, in embodiment 2, the video data is previously read responsive to software decoding process period of third multi-format decoder 304, and a seamless video sequence is realized.

### (Preferred embodiment 3)

Embodiment 3 is described hereinafter. A structure of a nonlinear editing device in accordance with embodiment 3 is same as that in embodiment 1 where second multi-format decoder 104 is replaced with a software decoder. This software decoder is called fourth multi-format decoder 404. Fourth multi-format decoder 404 can decode encoded video data with size smaller than a prescribed value in the DVCPRO format and the DV format in real time in a software process. Furthermore, first multi-format decoder 102 is constituted so as to decode encoded video data in the MPEG format and the DV format as well as encoded video data in the DVCPRO format and the DVCPRO50 format.

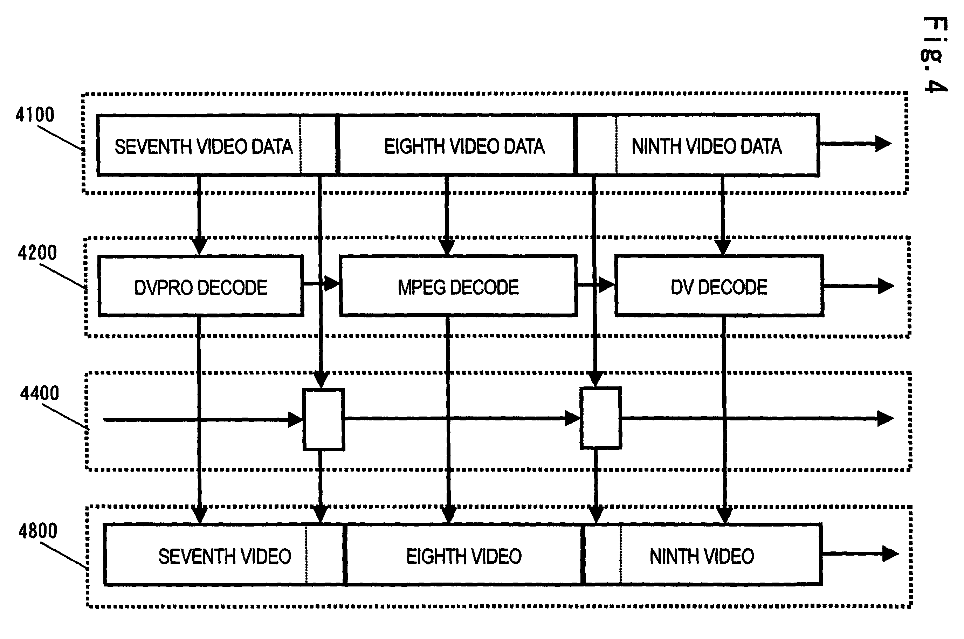

Fig. 4 is an operation timing chart of the nonlinear editing device in accordance with embodiment 3. In Fig. 4, sequence 4100 is a control sequence based on an edit decision list stored in editing control section 109. Sequence 4200 shows a transition of a decoding operation mode of first multi-format decoder 102. Sequence 4400 shows a transition of a decoding operation mode of fourth multi-format decoder 404. Sequence 4800 shows a transition of a video output operation of video output section 108.

First, seventh video data compressed and encoded in the DVCPRO format is read out from hard disk unit 101, and is supplied to first multi-format decoder 102. First multi-format decoder 102 decodes the seventh video data in the DVCPRO format decompression mode. The base band data decoded by first multi-format decoder 102 is supplied to DVE 106 through first format converter 103. Here, the latter portion of the seventh video data is decoded by fourth multi-format decoder 404. The base band data decoded by fourth multi-format decoder 404 is supplied to DVE 106 through first format converter 103. During the latter portion of the seventh video data is decoded by fourth multi-format decoder 404, first multi-format decoder 102 is switched from the DVCPRO format decompression mode to the MPEG format decompression mode.

Next, eighth video data compressed and encoded in the MPEG format is read out from hard disk unit 101, and is supplied to first multi-format decoder 102. Before this timing, first multi-format decoder 102 completes changeover of the decoding operation mode, and decodes the eighth video data in the MPEG format. The decoded base band data is supplied to DVE 106 through second format converter 105.

Next, the first portion of ninth video data compressed and encoded in the DV format is read out from hard disk unit 101, and is supplied to fourth multi-format decoder 404. Fourth multi-format decoder 404 is switched from the DVCPRO format decompression mode to the DV format decompression mode in time for this timing, and decodes the first portion of the ninth video data. The base band data decoded by fourth multi-format decoder 404 is supplied to DVE 106 through second format converter 105.

During the first portion of the ninth video data is decoded by fourth multi-format decoder 404, first multi-format decoder 102 is switched from the MPEG format decompression mode to the DV format decompression mode.

The latter portion of the ninth video data is supplied to first multi-format decoder 102. Before this timing, first multi-format decoder 102 completes changeover of the decoding operation mode, and decodes the latter portion of the ninth video data in the DV format. The decoded base band data is supplied to DYE 106 through first format converter 103.

DYE 106, based on control sequence 4100, performs timely cut back from the first portion to the latter portion of the seventh video, from the latter portion of the seventh video to the eighth video, from the eighth video to the first portion of the ninth video, and from the first portion to the latter portion of the ninth video, and outputs video data. The video data outputted from DVE 106 is supplied to video output section 108 through third format converter 107, and is supplied to a monitor.

Thus, in embodiment 3, a changeover period of decoding operation mode of first multi-format decoder 102 is obtained by concurrently performing a software decoding process of fourth multi-format decoder 404, and a seamless video sequence is realized.

### (Preferred embodiment 4)

Embodiment 4 is described hereinafter. A structure of a nonlinear editing device in accordance with embodiment 4 is same as that in embodiment 1 where first multi-format decoder 102 is replaced with a decoder that can switch a decoding operation mode substantially seamlessly by means of a pipeline treatment technology or the like. This decoder is called sixth multi-format decoder 162. Second multi-format decoder 104 is replaced with a software decoder, and this software decoder is called seventh multi-format decoder 174. Seventh multi-format decoder 174 can decode encoded video data in at least the DV format in real time in a software process.

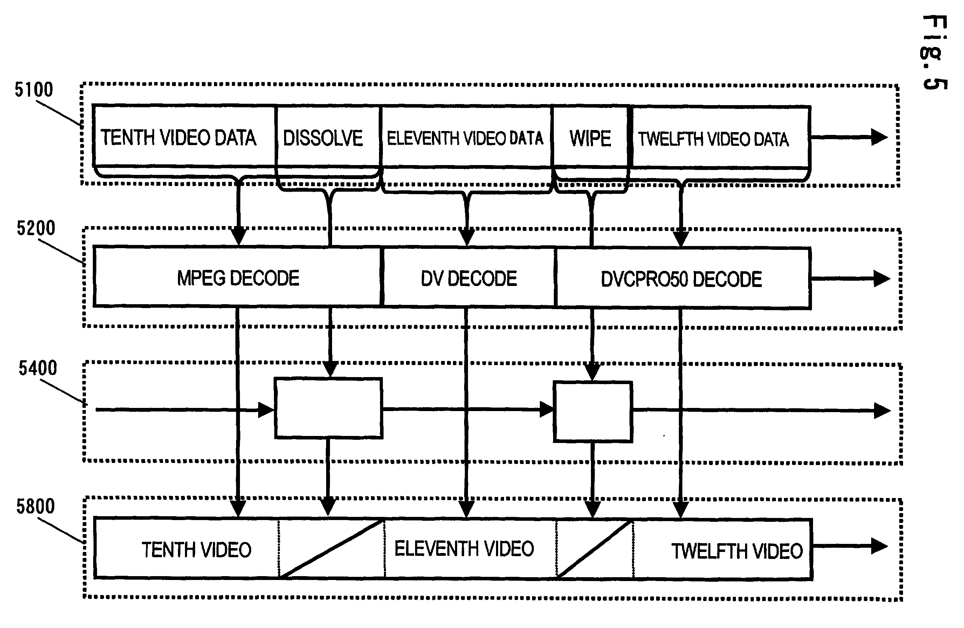

Fig. 5 is an operation timing chart of the nonlinear editing device in accordance with embodiment 4. In Fig. 5, sequence 5100 is a control sequence based on an edit decision list stored in editing control section 109. Sequence 5200 shows a transition of a decoding operation mode of sixth multi-format decoder 162. Sequence 5400 shows a transition of a decoding operation mode of seventh multi-format decoder 174. Sequence 5800 shows a transition of a video output operation of video output section 108.

First, tenth video data compressed and encoded in the MPEG format is read out from hard disk unit 101, and is supplied to sixth multi-format decoder 162. Sixth multi-format decoder 162 decodes the tenth video data in the DVCPRO format decompression mode. The base band data decoded by sixth multi-format decoder 162 is supplied to DVE 106 through first format converter 103.

The first portion of eleventh video data which is commanded with the dissolve effect is decoded by seventh multi-format decoder 174. The base band data decoded by seventh multi-format decoder 174 is supplied to DVE 106 through second format converter 105.

The intermediate part of the eleventh video data which is compressed and encoded in the DV format is supplied, following the tenth video data, from hard disk unit 101 to sixth multi-format decoder 162. Sixth multi-format decoder 162 seamlessly completes changeover of the decoding operation mode, and decodes the intermediate part of the eleventh video data in the DV format. The decoded base band data is supplied to DVE 106 through first format converter 103.

The latter portion (commanded with the wipe effect) of eleventh video data compressed and encoded in the DV format is supplied to seventh multi-format decoder 174. Seventh multi-format decoder 174 decodes the latter portion of the eleventh video data. The base band data decoded by seventh multi-format decoder 174 is supplied to DVE 106 through second format converter 105.

The twelfth video data compressed and encoded in the DVCPRO50 format is supplied, following the intermediate part of the eleventh video data, from hard disk unit 101 to sixth multi-format decoder 162. Sixth multi-format decoder 162 seamlessly completes the changeover of the decoding operation mode, and decodes the twelfth video data in the DVCPRO format. The decoded base band data is supplied to DVE 106 through first format converter 103.

DVE 106 applies the video effect based on control sequence 5100 and outputs the video data. The video data outputted from DVE 106 is supplied to video output section 108 through third format converter 107, and is supplied to a monitor.

Thus, in embodiment 4, a seamless video sequence is realized by using, as a main decoder, sixth multi-format decoder 162 having a seamless changeover function of the decoding operation mode, and supplementally operating seventh multi-format decoder 174 only during a video effect period.

In embodiments 1, 2, 3, 4 video data processes are described. Audio data accompanying the video data or independently inputted and stored audio data is processed similarly. The nonlinear editing device is not limited only to video editing. The nonlinear editing device can perform editing such as split, fade-in, fade-out, and cross-fade with the video data for the audio data. Furthermore, according to purposes, title data and image data that are produced in various formats can be imported and overlapped on video. The video effect realized by DVE 106 is not limited to the wipe effect or the dissolve effect, and various video effects such as a picture-in-picture effect are available. Color collection can be applied to the base band data fed into DVE 106.

### INDUSTRIAL APPLICABILITY

The present invention realizes a nonlinear editing device which can eliminate a troublesome process for unifying formats and allow a high-quality editing work where degradation of video data following recompression is prevented, even when mixed video source data in many kinds of compression formats exists.

### Reference numerals

- 101: HARD DISK UNIT
- 102: FIRST MULTI-FORMAT DECODER
- 103: FIRST FORMAT CONVERTER
- 104: SECOND MULTI-FORMAT DECODER
- 105: SECOND FORMAT CONVERTER
- 106: DIGITAL VIDEO EFFECTOR
- 107: THIRD FORMAT CONVERTER
- 108: VIDEO OUTPUT SECTION
- 109: EDITING CONTROL SECTION

## Claims

1. A nonlinear editing device for editing video data, audio data, or video data and audio data, said nonlinear editing device comprising:
a storage for recording video data compressed and encoded in a plurality of kinds of compression formats keeping the compression formats; and
a first multi-format decoder for decompressing the video data recorded in the storage in at least two or more compression formats of the plurality of kinds of compression formats.

2. The nonlinear editing device according to claim 1 further comprising
a second multi-format decoder for decompressing the video data recorded in said storage in at least one or more compression formats of the plurality of kinds of compression formats.

3. The nonlinear editing device according to claim 2, wherein at least one of said first multi-format decoder and said second multi-format decoder is a software decoder realized by a software.

4. The nonlinear editing device according to claims 2 or 3, wherein said first multi-format decoder and said second multi-format decoder are sequentially switched with each other responsive to a transition point of compression formats when compression formats of video data read out from said storage are various.

5. The nonlinear editing device according to claims 2 or 3, wherein said second multi-format decoder decompresses video data in a part at least one of just before a transition point of compression formats and just after of the transition point, and said first multi-format decoder decompresses video data in the other part, when compression formats of the video data read out from said storage are various.

6. The nonlinear editing device according to claims 2 or 3 further comprising
a digital video effector for synthesizing output data of said first multi-format decoder and output data of said second multi-format decoder.

7. The nonlinear editing device according to claim 4 further comprising
a digital video effector for synthesizing output data of said first multi-format decoder and output data of said second multi-format decoder.

8. The nonlinear editing device according to claim 5 further comprising
a digital video effector for synthesizing output data of said first multi-format decoder and output data of said second multi-format decoder.

9. The nonlinear editing device according to claims 1, 2, or 3 further comprising
a first format converter for converting output data of said first multi-format decoder with at least one of SD (Standard Definition) / HD (High Definition) conversion, HD/SD conversion, NTSC (National Television System Committee) / PAL (Phase Alternation Line) conversion, and PAL/NTSC conversion.

10. The nonlinear editing device according to claim 4 further comprising
a first format converter for converting output data of said first multi-format decoder with at least one of SD/HD conversion, HD/SD conversion, NTSC/PAL conversion, and PAL/NTSC conversion.

11. The nonlinear editing device according to claim 5 further comprising
a first format converter for converting output data of said first multi-format decoder with at least one of SD/HD conversion, HD/SD conversion, NTSC/PAL conversion, and PAL/NTSC conversion.

12. The nonlinear editing device according to claim 6 further comprising
a first format converter for converting the output data of said first multi-format decoder with at least one of SD/HD conversion, HD/SD conversion, NTSC/PAL conversion, and PAL/NTSC conversion.

13. The nonlinear editing device according to claims 7 or 8 further comprising
a first format converter for converting the output data of said first multi-format decoder with at least one of SD/HD conversion, HD/SD conversion, NTSC/PAL conversion, and PAL/NTSC conversion.

14. The nonlinear editing device according to claims 2 or 3 further comprising
a second format converter for converting output data of said second multi-format decoder with at least one of SD/HD conversion, HD/SD conversion, NTSC/PAL conversion, and PAL/NTSC conversion.

15. The nonlinear editing device according to claim 4 further comprising
a second format converter for converting output data of said second multi-format decoder with at least one of SD/HD conversion, HD/SD conversion, NTSC/PAL conversion, and PAL/NTSC conversion.

16. The nonlinear editing device according to claim 5 further comprising
a second format converter for converting output data of said second multi-format decoder with at least one of SD/HD conversion, HD/SD conversion, NTSC/PAL conversion, and PAL/NTSC conversion.

17. The nonlinear editing device according to claim 6 further comprising
a second format converter for converting the output data of said second multi-format decoder with at least one of SD/HD conversion, HD/SD conversion, NTSC/PAL conversion, and PAL/NTSC conversion.

18. The nonlinear editing device according to claims 7 or 8 further comprising
a second format converter for converting the output data of said second multi-format decoder with at least one of SD/HD conversion, HD/SD conversion, NTSC/PAL conversion, and PAL/NTSC conversion.

19. The nonlinear editing device according to claim 9 further comprising
a second format converter for converting output data of said second multi-format decoder with at least one of SD/HD conversion, HD/SD conversion, NTSC/PAL conversion, and PAL/NTSC conversion.

20. The nonlinear editing device according to claims 10 or 11 further comprising
a second format converter for converting output data of said second multi-format decoder with at least one of SD/HD conversion, HD/SD conversion, NTSC/PAL conversion, and PAL/NTSC conversion.

21. The nonlinear editing device according to claim 12 further comprising
a second format converter for converting the output data of said second multi-format decoder with at least one of SD/HD conversion, HD/SD conversion, NTSC/PAL conversion, and PAL/NTSC conversion.

22. The nonlinear editing device according to claim 13 further comprising
a second format converter for converting the output data of said second multi-format decoder with at least one of SD/HD conversion, HD/SD conversion, NTSC/PAL conversion, and PAL/NTSC conversion.

23. The nonlinear editing device according to claim 6 further comprising
a third format converter for converting output data of said digital video effector with at least one of SD/HD conversion, HD/SD conversion, NTSC/PAL conversion, and PAL/NTSC conversion.

24. The nonlinear editing device according to claims 7 or 8 further comprising
a third format converter for converting output data of said digital video effector with at least one of SD/HD conversion, HD/SD conversion, NTSC/PAL conversion, and PAL/NTSC conversion.

25. The nonlinear editing device according to claim 12 further comprising
a third format converter for converting output data of said digital video effector with at least one of the SD/HD conversion, the HD/SD conversion, the NTSC/PAL conversion, and the PAL/NTSC conversion.

26. The nonlinear editing device according to claim 13 further comprising
a third format converter for converting output data of said digital video effector with at least one of the SD/HD conversion, the HD/SD conversion, the NTSC/PAL conversion, and the PAL/NTSC conversion.

27. The nonlinear editing device according to claim 17 further comprising
a third format converter for converting output data of said digital video effector with at least one of the SD/HD conversion, the HD/SD conversion, the NTSC/PAL conversion, and the PAL/NTSC conversion.

28. The nonlinear editing device according to claim 18 further comprising
a third format converter for converting output data of said digital video effector with at least one of the SD/HD conversion, the HD/SD conversion, the NTSC/PAL conversion, and the PAL/NTSC conversion.

29. The nonlinear editing device according to claim 21 further comprising
a third format converter for converting output data of said digital video effector with at least one of the SD/HD conversion, the HD/SD conversion, the NTSC/PAL conversion, and the PAL/NTSC conversion.

30. The nonlinear editing device according to claim 22 further comprising
a third format converter for converting output data of said digital video effector with at least one of the SD/HD conversion, the HD/SD conversion, the NTSC/PAL conversion, and the PAL/NTSC conversion.

31. A nonlinear editing method for editing video data, audio data, or video data and audio data, said nonlinear editing method comprising
a first decoding step for sequentially decompressing video data which is recorded in a storage that can record the video data compressed and encoded in a plurality of kinds of compression formats keeping the compression formats and has at least two or more compression formats of the plurality of kinds of compression formats.

32. The nonlinear editing method according to claim 31 further comprising
a second decoding step for sequentially decompressing video data recorded in the storage in at least one or more compression formats of the plurality of kinds of compression formats.

33. The nonlinear editing method according to claim 32, wherein said first decoding step and said second decoding step are sequentially switched with each other responsive to a transition point of compression formats when compression formats of the video data read out from the storage are various.

34. The nonlinear editing method according to claim 32, wherein video data in a part at least one of just before a transition point of compression formats and just after of the point are decompressed in said second decoding step, and video data in the other part is decompressed in said first decoding step, when compression formats of the video data read out from said storage are various.

35. The nonlinear editing method according to claims 32, 33, or 34 further comprising
a video effect step for synthesizing output data obtained in said first decoding step and output data obtained in said second decoding step.

36. The nonlinear editing method according to claim 31 further comprising
a first format converting step for converting output data of said first decoding step with at least one of SD/HD conversion, HD/SD conversion, NTSC/PAL conversion, and PAL/NTSC conversion.

37. The nonlinear editing method according to claims 32, 33, or 34 further comprising
a first format converting step for converting output data obtained in said first decoding step with at least one of SD/HD conversion, HD/SD conversion, NTSC/PAL conversion, and PAL/NTSC conversion.

38. The nonlinear editing method according to claim 35 further comprising
a first format converting step for converting output data obtained in said first decoding step with at least one of SD/HD conversion, HD/SD conversion, NTSC/PAL conversion, and PAL/NTSC conversion.

39. The nonlinear editing method according to claims 32, 33, or 34 further comprising
a second format converting step for converting output data obtained in said second decoding step with at least one of SD/HD conversion, HD/SD conversion, NTSC/PAL conversion, and PAL/NTSC conversion.

40. The nonlinear editing method according to claim 35 further comprising
a second format converting step for converting the output data obtained in said second decoding step with at least one of SD/HD conversion, HD/SD conversion, NTSC/PAL conversion, and PAL/NTSC conversion.

41. The nonlinear editing method according to claim 37 further comprising
a second format converting step for converting the output data obtained in said second decoding step with at least one of SD/HD conversion, HD/SD conversion, NTSC/PAL conversion, and PAL/NTSC conversion.

42. The nonlinear editing method according to claim 38 further comprising
a second format converting step for converting the output data obtained in said second decoding step with at least one of SD/HD conversion, HD/SD conversion, NTSC/PAL conversion, and PAL/NTSC conversion.

43. The nonlinear editing method according to claim 35 further comprising
a third format converting step for converting output data obtained in said video effect step with at least one of SD/HD conversion, HD/SD conversion, NTSC/PAL conversion, and PAL/NTSC conversion.

44. The nonlinear editing method according to claim 38 further comprising
a third format converting step for converting output data obtained in said video effect step with at least one of the SD/HD conversion, the HD/SD conversion, the NTSC/PAL conversion, and the PAL/NTSC conversion.

45. The nonlinear editing method according to claims 40 or 42 further comprising
a third format converting step for converting output data obtained in said video effect step with at least one of the SD/HD conversion, the HD/SD conversion, the NTSC/PAL conversion, and the PAL/NTSC conversion.
